# EUROPEAN PATENT APPLICATION

(11) **EP 2 535 533 A2**
(43) Date of publication of application: **19.12.2012**
(21) Application number: 12171698.9
(22) Date of filing: 12.06.2012
(51) Int. Cl.: F01K 23/10

(54) **Asymmetrical combined cycle power plant**

(30) Priority: 14.06.2011 US 201113159546
(71) Applicant: General Electric Company, Schenectady, NY 12345 (US)
(72) Inventor: Gulen, Seyfettin Can, Schenectady, NY New York 12345 (US)
(74) Representative: Cleary, Fidelma

(57) **Abstract**

A combined cycle power plant (100) includes a first engine (102), a second engine (104), a first heat recovery steam generator (112), a second heat recovery steam generator (114), and a steam turbine (110). The second engine (104) is relatively more productive but less efficient than the first engine (102). The first engine (102) generates a first exhaust gas, and the second engine (104) generates a second exhaust gas. The first heat recovery steam generator (112) transfers excess energy from the first exhaust gas to a first flow of water, creating a first flow of steam. The second heat recovery steam generator (114) transfers excess energy from the second exhaust gas to a second flow of water, creating a second flow of steam. The second heat recovery steam generator (114) further transfers excess energy from the second exhaust gas to the first flow of steam and the second flow of steam, creating a flow of superheated steam. The steam turbine (110) receives the flow of superheated steam from the second heat recovery steam generator (114).

## Description

### TECHNICAL FIELD

The present disclosure generally relates to a combined cycle power plant, and more particularly relates to a combined cycle power plant having two different gas turbines.

### BACKGROUND OF THE INVENTION

A combined cycle power plant utilizes a gas turbine and a steam turbine in combination to produce power. The power plant is arranged such that the gas turbine is thermally connected to the steam turbine through a heat recovery steam generator ("HRSG"). The HRSG employs heat from the exhaust gases of the gas turbine to create steam for expansion in the steam turbine. The primary efficiency of the combined cycle arrangement is the utilization of the otherwise wasted heat from the gas turbine exhaust gases.

Some combined cycle power plants employ a number of gas turbines. Each gas turbine may be thermally coupled to the same HRSG, or each gas turbine may be thermally coupled to a different HRSG. Such a combined cycle power plant may not make the most efficient transfer of waste energy to the steam turbine. Thus, there is a desire for a combined cycle power plant that provides increased efficiency.

### BRIEF DESCRIPTION OF THE INVENTION

The present invention resides in a combined cycle power plant including a first engine, a second engine, a first heat recovery steam generator, a second heat recovery steam generator, and a steam turbine. The second engine is relatively more productive but less efficient than the first engine. The first engine generates a first exhaust gas, and the second engine generates a second exhaust gas. The first heat recovery steam generator transfers excess energy from the first exhaust gas to a first flow of water, creating a first flow of steam. The second heat recovery steam generator transfers excess energy from the second exhaust gas to a second flow of water, creating a second flow of steam. The second heat recovery steam generator further transfers excess energy from the second exhaust gas to the first flow of steam and the second flow of steam, creating a flow of superheated steam. The steam turbine receives the flow of superheated steam from the second heat recovery steam generator.

Other systems, devices, methods, features, and advantages of the disclosed combined cycle power plant will be apparent or will become apparent to one with skill in the art upon examination of the following figures and detailed description. All such additional systems, devices, methods, features, and advantages are intended to be included within the description and are intended to be protected by the accompanying claims.

### BRIEF DESCRIPTION OF THE DRAWINGS

Embodiments of the present invention will now be described, by way of example only, with reference to the accompanying drawings in which:
FIG. 1 is a schematic diagram of embodiment of an asymmetrical combined cycle power plant.
FIG. 2 is a schematic diagram illustrating embodiments of heat recovery steam generators for an asymmetrical combined cycle power plant, such as the plant shown in FIG. 1.
FIG. 3 is an example graph illustrating a relationship between temperature and entropy for an asymmetrical combined cycle power plant, such as the plant shown in FIG. 1.

### DETAILED DESCRIPTION OF THE INVENTION

Described below are embodiments of an asymmetrical combined cycle power plant that employs two different topping cycle engines in combination with a single bottoming cycle engine. The two topping cycle engines are different from each other in a manner that causes one of the topping cycle engines to be more productive but less efficient than the other topping cycle engine. The two topping cycle engines are thermodynamically coupled to the bottoming cycle engine by way of a heat recovery system. The heat recovery system relies more heavily on the less efficient topping cycle engine to feed the bottoming cycle engine, thereby increasing the efficiency of the overall power plant.

For the purposes of this disclosure, the term "topping cycle engine" generally refers to an engine within the combined cycle power plant that generates waste energy that is recaptured for use in another portion of the combined cycle power plant. The term "bottoming cycle engine" generally refers to an engine within the combined cycle power plant that employs waste energy from a topping cycle engine, increasing the efficiency of the combined cycle power plant as a whole.

The combined cycle power plant is "asymmetrical" because the topping cycle engines differ from each other. One of the topping cycle engines is more productive but less efficient than the other topping cycle engine due to at least one difference between the engines. For example, the more productive topping cycle engine may be different from the more efficient topping cycle engine in terms of pressure ratio, size, power output, efficiency, exhaust gas temperature, or combinations thereof. The term "productive" with reference to an engine generally refers to the ability of the engine to generate useful shaft work, and in some cases the productivity of the engine may be represented by the maximum temperature and pressure ratio of the engine for a particular cycle.

In some embodiments, the more productive topping cycle engine is an industrial heavy-duty gas turbine, while the more efficient topping cycle engine is an aeroderivative gas turbine or a reciprocating engine, such as a natural gas fired Diesel engine. The bottoming cycle engine is generally a steam turbine. However, the principles of the present disclosure can be employed with reference to asymmetrical combined cycle power plants that have other numbers or combinations of engines.

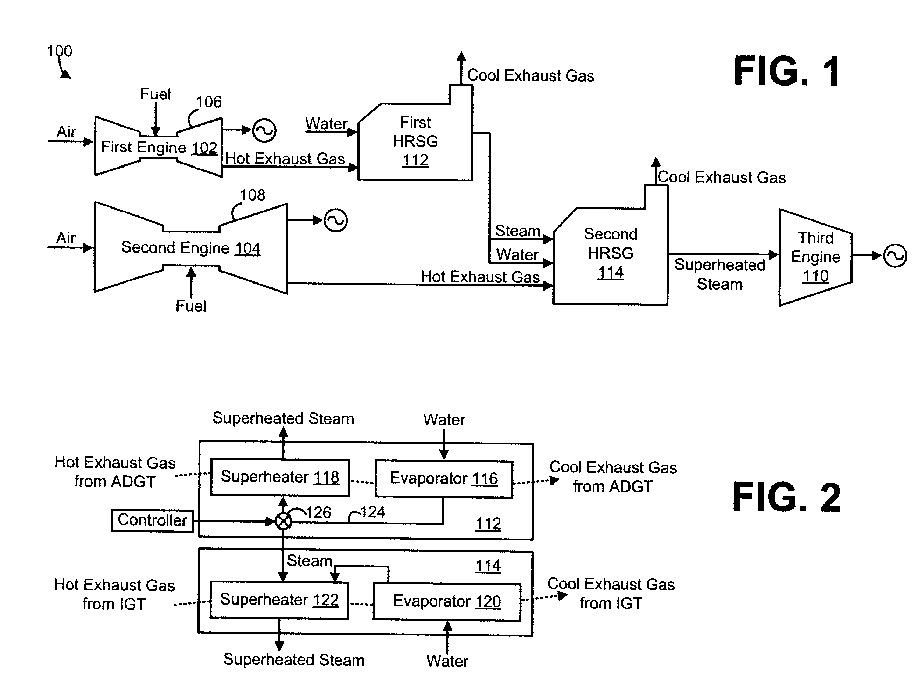

FIG. 1 is a schematic diagram of embodiment of an asymmetrical combined cycle power plant 100. The power plant 100 includes first and second topping cycle engines 102, 104 and one bottoming cycle engine 110. In the illustrated embodiment, the first topping cycle engine 102 is an aeroderivative gas turbine 106, and the second topping cycle engine 104 is an industrial gas turbine 108, although other engines can be used.

The industrial gas turbine 108 may be a large and robust machine that is fixed in place due to its size and is capable of generating a large output during steady state operation. The industrial gas turbine 108 may exhibit good tolerances for high temperatures and loads for extended periods, but may experience a long transition period on startup and may not be suited for absorbing rapid thermal changes associated with frequent startups and shutdowns. The aeroderivative gas turbine 106 may be a smaller and lighter machine that is suited for quick startup and shut down, but generates a smaller output once fully operational. The aeroderivative gas turbine 106 may be relatively fuel efficient in comparison to an industrial gas turbine 108, but may be less reliable. In terms of thermodynamic cycle parameters, the industrial gas turbine 108 differs from the aeroderivative gas turbine 106 in pressure ratio, power output, efficiency, and exhaust gas temperature. The industrial gas turbine 108 may have a lower pressure ratio than the aeroderivative gas turbine 106 but may generate a higher temperature exhaust gas.

For example, the industrial gas turbine 108 may be an E- or F-Class turbine by General Electric Company, such as a Model 7EA gas turbine, which has an 85 MW output capacity, or a Model 7FA gas turbine, which has a 212 MW output capacity. The temperature of the exhaust gas from the industrial gas turbine 108 may be relatively high, such as about 1150°F or higher.

The aeroderivative gas turbine 106 may be a Model LMS100 gas turbine, which also is made by General Electric Company. The LMS100 is dry-low emission (DLE) machine that has a 98 MW output capacity and is capable of achieving a full load within ten minutes from standstill. The temperature of the exhaust gas from the aeroderivative gas turbine 106 may be relatively lower, such as about 800°F or lower.

Furthermore, other topping cycle engines 102, 104 can be used in other embodiments of the combined cycle power plant 100. For example, the aeroderivative gas turbine 106 can be substituted with a reciprocating engine, such as a natural gas fired Diesel engine.

The bottoming cycle engine 110 is a steam turbine. In some embodiments, the steam turbine may be a non-reheat steam turbine, such as a 1400 psig machine with an operating temperature of about 978°F or 1050°F. Such a steam turbine may have an output capacity of about 69 MW or about 117 MW. In other embodiments, the steam turbine may be a reheat steam turbine, such as with steam pressures of 1800 psig or higher and steam temperatures of 1050°F or higher. Such a reheat steam turbine may achieve a better overall combined cycle efficiency in combination with larger industrial gas turbines, such as an F-Class gas turbine from General Electric Company. Other steam turbines may be employed based on, for example, desired cost and performance.

The two topping cycle engines are thermodynamically coupled to the bottoming cycle engine by way of at least one heat recovery steam generator (HRSG). The HRSG recovers heat from exhaust gases exiting the topping cycle engine and employs the heat to create steam for expansion in the bottoming cycle engine. The HRSG may have one or more pressure sections, such as a high-pressure section, an intermediate pressure section, and a low-pressure section. Each pressure section may include any combination of evaporators, superheaters, and economizers. Each of these components typically includes a bundle of tubes across which the exhaust gases flow, transferring heat from the exhaust gases to the fluid flowing through the tubes. For example, the evaporator has feedwater flowing through its tubes, and the exhaust gases cause the feedwater to turn to steam. The superheater has steam flowing through its tubes, and the exhaust gases heat the steam to create superheated steam. The economizer has feedwater flowing through its tubes, and the exhaust gases preheat the feedwater for use in the evaporator.

One conventional configuration for an HRSG defines a flow path for the exhaust gases that extends horizontally through the HRSG, and the tubes of the various components extend vertically through the HRSG. To make the most efficient use of the waste energy in the exhaust gases, the superheater is usually positioned upstream of the evaporator, and the economizer is usually positioned downstream of the evaporator, so that the exhaust gases flow over the superheater, the evaporator, and the economizer in succession. However, a wide range of HRSG configurations can be employed.

The combined cycle power plant 100 is arranged such that the exhaust gases of both the industrial gas turbine 108 and the aeroderivative gas turbine 106 are used to create steam, but the exhaust gases of the industrial gas turbine 108 are disproportionately used to superheat the steam. To accomplish this arrangement, the industrial gas turbine 108 and the aeroderivative gas turbine 106 may each be associated with an HRSG. Both HRSGs may be used to create steam, but the HRSG of the industrial gas turbine 108 is disproportionately used to superheat the steam. During at least a portion of the operation cycle, the steam created by the HRSG associated with the aeroderivative gas turbine 106 may be routed to the HRSG associated with the industrial gas turbine 108 for superheating.

An example is shown in FIG. 1. The aeroderivative gas turbine 106 is associated with a first HRSG 112, and the industrial gas turbine 108 is associated with a second HRSG 114. The second HRSG 114 can be a two-pressure or three-pressure unit with reheat or no reheat. The first HRSG 112 may be a one or two-pressure unit with no reheat and with no superheater or a bypassed superheater. Such a configuration recognizes that the exhaust gas of the aeroderivative gas turbine 106 may not have enough energy for the reheat process or for superheating. Thus, the limited energy in the exhaust gas of the aeroderivative gas turbine 106 is preserved for steam generation, enabling steam generation at a higher pressure.

During at least steady state operations, the industrial gas turbine 108 is operated to generate a first output, also generating hot exhaust gases in the process. Similarly, the aeroderivative gas turbine 106 is operated to generate a second output, also generating hot exhaust gases in the process. The hot exhaust gases from the aeroderivative gas turbine 106 are provided to the first HRSG 112, which recovers heat from the hot exhaust gases to produce a first flow of steam. The hot exhaust gases from the industrial gas turbine are provided to the second HRSG 114, which recovers heat from the hot exhaust gases to produce a second flow of steam. The first and second flows of steam are provided to the second HRSG 114, which creates a flow of superheated steam from the first and second flows of steam. The second HRSG 114 then provides the flow of superheated steam to the steam turbine for expansion therein.

Such a configuration is effective because the exhaust gases of the industrial gas turbine 108 tend to have relatively more excess energy than the exhaust gases of the aeroderivative gas turbine 106. Thus, the exhaust gases of the aeroderivative gas turbine 106 may have enough energy to create a portion of the steam that is expanded in the steam turbine, while the exhaust gases of the industrial gas turbine 108 may have enough energy to create the remainder of the steam and to superheat all of the steam that is expanded in the steam turbine. For example, the exhaust gases from the industrial gas turbine 108 may have a temperature of 1150°F and may be suited to generate high-pressure steam and to superheat the steam to 1050°F or higher, while exhaust gases from the aeroderivative gas turbine 106 may have a temperature of 800°F and may be suited to generate steam at 1800 psi or higher at a saturation temperature of 621 °F.

An example configuration of HRSGs is shown in FIG. 2. The first HRSG 112 includes at least one evaporator 116 and at least one superheater 118, and the second HRSG 114 includes at least one evaporator 120 and at least one superheater 122. The evaporator 116 of the first HRSG 112 is in fluid communication with both of the superheaters 118, 122 by way of at least one steam delivery pipe 124 associated with at least one valve 126. The valve 126 may be controlled, such as via a controller, to deliver steam from the evaporator 116 to one or both of the superheaters 118, 122 at various points during the operational cycle. For example, steam from the evaporator 116 may be directed to the superheater 118 of the first HRSG 112 during startup operations, during transient operations, when the industrial gas turbine is not operational, or when the industrial gas turbine is not fully operational. Otherwise, steam from the evaporator 116 may directed to the superheater 122 of the second HRSG 114, as hotter exhaust gases are flowing through the second HRSG 114 during steady state operation.

Thus, the superheater 118 of the first HRSG 112 may be used at appropriate times during the operational cycle but otherwise may be bypassed. Bypassing the superheater 118 effectively entails not directing steam through the superheater 118, such that the superheater 118 is dry. Because the exhaust gases flowing through the first HRSG 112 may have a relatively lower temperature, such as around 800°F or so, dry operation may not impose a substantial hurdle in terms of superheater tube material selection.

During start-up operation of the combined cycle power plant 100, the industrial gas turbine 108 may experience a delay before it ramps up, but the aeroderivative gas turbine 106 may ramp up relatively quickly, creating exhaust gases that flow through the first HRSG 112. The exhaust gases may evaporate water flowing through the evaporator 116, creating steam that flows through the supply line 124. The valve 126 may be operated so that the steam flowing through supply line 124 is directed to the superheater 118 and not the superheater 122. The exhaust gases flowing through the first HRSG 112 may superheat the steam flowing through the superheater 118 to create superheated steam, which is provided to the steam turbine for expansion therein.

During steady-state operation, the aeroderivative gas turbine 106 may generate exhaust gases that flow through the first HRSG 112, and the industrial gas turbine 108 may generate exhaust gases that flow through the second HRSG 114. The exhaust gases flowing through the first HRSG 112 may evaporate water flowing through the evaporator 116, creating steam that flows through the supply line 124. The valve 126 may be operated so that the steam flowing through supply line 124 is directed to the superheater 122, by passing the superheater 118. The exhaust gases flowing through the second HRSG 114 may superheat the steam flowing through the superheater 122 to create superheated steam, which is provided to the steam turbine for expansion therein. The exhaust gases flowing through the second HRSG 114 also may evaporate water flowing through the evaporator 120, creating steam that is superheated in the superheater 122. Thus, the superheater 122 of the second HRSG 114 may be used to superheat all of the steam that is provided to the steam turbine during steady-state operations, while the superheater 118 of the first HRSG 112 may be used during startup or transient operations or when the industrial gas turbine is shutdown.

In other embodiments, the first HRSG 112 may lack a superheater completely, in which case the steam delivery pipe 122 may deliver steam exiting the evaporator 116 of the first HRSG 112 to the superheater 122 of the second HRSG 114. Thus, the superheater 122 of the second HRSG 114 may be used to superheat all of the steam that is provided to the steam turbine. In still other embodiments, the first HRSG 112 may be omitted completely, and the exhaust gases of the aeroderivative gas turbine 106 may be directed into the second HRSG 114 downstream of a high pressure section.

The combined cycle power plant exhibits optimized thermal matching between the exhaust gas of the topping cycle (a heat source) and the working fluid of the bottoming cycle (a heat sink). The exhaust gas of the aeroderivative turbine is primarily used to produce steam at a pressure commensurate with its temperature, as the exhaust gas of the aeroderivative gas turbine has limited energy in comparison to the exhaust gas of the industrial gas turbine. The exhaust gas of the industrial gas turbine is used to both produce some of the steam and to superheat the majority of the steam, as the exhaust gases of the industrial gas turbine may have enough energy to superheat the steam to a temperature suited for use in the steam turbine. For example, the exhaust gases of the aeroderivative gas turbine may produce a first portion of the steam, the exhaust gases of the industrial gas turbine may produce a second portion of the steam, and the exhaust gases of the industrial gas turbine may superheat the first and second portions of the steam. The thermodynamics principles embodied in the combined cycle power plant are explained below.

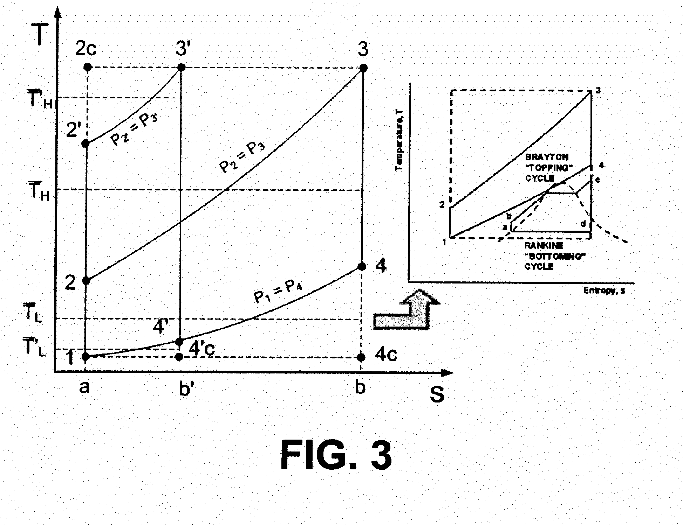

FIG. 3 is a graph illustrating the relationship between temperature and entropy for the asymmetrical combined cycle power plant. The two topping cycle engines operate in accordance with the Brayton cycle. The points 1-2-3-4 represent the temperature-entropy behavior of the industrial gas turbine, which completes four distinct processes to generate work. First, isentropic compression occurs along line 1-2. Next, heat is added at constant pressure along line 2-3. Thereafter, isentropic compression occurs along line 3-4. Finally, heat is rejected at constant pressure along line 4-1.

The area defined within points 1-2-3-4-1 represents the work produced by the industrial gas turbine, while the area defined between line 2-3 and the x-axis (points 1-2-3-4c-1) represents the heat added to the industrial gas turbine, and the area defined between line 4-1 and the x-axis (points 1-4-4c-1) represents the heat wasted by the industrial gas turbine. The difference between the heat added (points 1-2-3-4c-1) and the heat wasted (points 1-4-4c-1) represents the output of the industrial gas turbine. Similarly, the area defined by the points 1-2'-3'-4'-1 represents the temperature-entropy behavior of the aeroderivative gas turbine.

The two turbines exhibit comparable but different thermodynamic behavior for the same maximum cycle temperature. The aeroderivative gas turbine is more efficient than the industrial gas turbine, generating less waste energy as evidenced by the area defined by points 1-4'-4c'-1 in comparison to the area defined by points 1-4-4c-1, but the aeroderivative gas turbine also is less productive, as evidenced by the area within points 1-2'-3'-4'-1 in comparison to the area within points 1-2-3-4-1.

One characteristic of an engine is its pressure ratio, which is represented by the vertical position of the line associated with the process of heat addition, such as 2-3 or 2'-3'. The aeroderivative gas turbine has a higher pressure ratio than the industrial gas turbine, as evidenced by the higher vertical position of the line 2'-3' in comparison to the line 2-3. Thus, the diagram reflects a relationship between pressure ratio, efficiency, output, and waste for the gas turbine: a gas turbine with a higher pressure ratio will exhibit higher efficiency and generate less waste but will also generate reduced output, while a gas turbine with a lower pressure ratio will exhibit lower efficiency and generate more waste but also will generate increased output.

The asymmetrical combined cycle power plant described herein reflects a recognition that the wasted energy from the topping cycle constitutes an inefficiency only if it is not utilized in the bottoming cycle to generate additional output. Thus, the bottoming cycle draws disproportionately from the less efficient topping cycle engine (i.e. the engine with the lower pressure ratio) because the more efficient topping cycle engine (i.e. the engine with the higher pressure ratio) generates less waste heat that can perform work in the bottoming cycle. For example, for the same maximum cycle temperature, the maximum potential bottoming cycle work of the more efficient engine, represented by the area within points 1-4'-4c'-1, is less than the maximum potential bottoming cycle work of the less efficient engine, represented by the area defined within points 1-4-4c-1.

A graph illustrating the relationship between temperature and entropy for a steam turbine or other engine operating in accordance with the Rankine cycle is also illustrated in FIG. 3. The graph for the steam turbine cycle is superimposed over the graph for the gas turbine cycle, schematically illustrating how the steam turbine of the bottoming cycle recaptures lost work from the topping cycle in the form of waste heat to generate additional work.

Although two gas turbines operating in accordance with the Brayton cycle and one steam turbine operating in accordance with the Rankine cycle are described above, the principles described herein can be employed for other types of engines or for engines operating in accordance with other cycles, such as the Otto cycle or the Diesel cycle.

The aeroderivative gas turbine enables bringing the asymmetrical combined cycle power plant online quickly and producing power quickly, while the industrial gas turbine enables generating a large output during steady state operation. For example, an embodiment of the combined cycle power plant described above may achieve outputs of 115 or 140 MW in 10 minutes, about 185 or 310 MW in 20 minutes, and about 250 or 420 MW in 40 minutes. The total base load efficiency of the combined cycle power plant may be about 52% to 55%. The combined cycle power plant can be operated at a partial load by shutting down the aeroderivative gas turbine, without sacrificing the efficiency of the industrial gas turbine. Thus, the plant offers fast start-up and shut-down, efficient part load operations, and mixed fuel operations.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A combined cycle power plant (100) comprising:
a first engine (102) that generates a first exhaust gas;
a second engine (104) that generates a second exhaust gas, the second engine (104) being relatively more productive but less efficient than the first engine (102);
a first heat recovery steam generator (112) that transfers excess energy from the first exhaust gas to a first flow of water, creating a first flow of steam;
a second heat recovery steam generator (114) that transfer excess energy from the second exhaust to a second flow of water, creating a second flow of steam, the second heat recovery steam generator (114) further transferring excess energy from the second exhaust gas to the first flow of steam and the second flow of steam, creating a flow of superheated steam; and
a steam turbine (110) that receives the flow of superheated steam from the second heat recovery steam generator (114).

2. The combined cycle power plant (100) of claim 1, wherein the first engine (102) is an aeroderivative gas turbine (106), and the second engine (104) is an industrial gas turbine (108).

3. The combined cycle power plant (100) of claim 1, wherein the first engine (102) is a reciprocating engine, and the second engine (104) is an industrial gas turbine (108).

4. The combined cycle power plant (100) of claim 1, wherein:
the first engine (102) is a first gas turbine;
the second engine (104) is a second gas turbine, the first gas turbine having a higher pressure ratio than the second gas turbine.

5. The combined cycle power plant (100) of any of claims 1 to 4, wherein the second exhaust gas has a higher temperature than the first exhaust gas.

6. The combined cycle power plant (100) of any preceding claim, wherein:
the first heat recovery steam generator (112) includes a first evaporator (116); and
the second heat recovery steam generator (114) includes:
a second evaporator (120); and
a superheater (122), the superheater (122) in fluid communication with the first evaporator (116) and the second evaporator (120).

7. The combined cycle power plant of any preceding claim, further comprising:
a steam pipe (124) that places the first heat recovery steam generator (112) in fluid communication with the second heat recovery steam generator (114) so that steam from the first heat recovery steam generator (112) can be provided to the second heat recovery steam generator (114).

8. The combined cycle power plant of claim 6, wherein the first heat recovery steam generator (112) does not include a superheater.

9. The combined cycle power plant of claim 6, wherein the first heat recovery steam generator (112) includes a superheater that is bypassed during steady state operation.

10. The combined cycle power plant of claim 7 when dependent on claim 6, wherein the steam pipe (124) places the first evaporator (116) in fluid communication with the superheater (122).

11. The combined cycle power plant of claim 10, wherein the steam pipe (124) is associated with a valve (126) that is operable to direct steam into the superheater (122) during steady state operations.
